# EUROPÄISCHE PATENTSCHRIFT

(11) **EP 2 420 906 B1**
(45) Veröffentlichungstag und Bekanntmachung des Hinweises auf die Patenterteilung: **17.10.2018**
(21) Anmeldenummer: 11177985.6
(22) Anmeldetag: 18.08.2011
(51) Int. Cl.: G05B 19/18

(54) **Verfahren und Vorrichtung zum Erzeugen von Steuerdaten zur Ausbildung eines Zahns einer Stirnradverzahnung durch fräsende Bearbeitung eines Werkstücks an einer Werkzeugmaschine**
Method and device for generating control data for creating a tooth of a spur gear cogging by means of machining a workpiece on a machine tool
Procédé et dispositif de production de données de commande pour la formation d'une dent d'une denture à renvoi à l'aide d'un traitement par fraisage d'une pièce usinée sur une machine-outil

(30) Priorität: 18.08.2010 DE 102010039490
(43) Veröffentlichungstag der Anmeldung: 22.02.2012
(73) Patentinhaber: DECKEL MAHO Pfronten GmbH, 87459 Pfronten (DE)
(72) Erfinder: Neumaier, Josef, 87459 Pfronten (DE); Lochbihler, Thomas, 6682 Vils (AT); Hansen, Uwe-Carsten, 87637 Eisenberg (DE)
(74) Vertreter: MERH-IP Matias Erny Reichl Hoffmann Patentanwälte PartG mbB

(56) Entgegenhaltungen:
- WO-A1-2008/133517
- SCHOSSIG H-P: "AUF EINFACHEM WEG ZU GUTEN ZAEHNEN", WERKSTATT + BETRIEB, CARL HANSER VERLAG, MÜNCHEN DE, Bd. 140, Nr. 4, 1. Januar 2007 (2007-01-01), Seiten 28-30,32, XP001540544, ISSN: 0043-2792
- PROF DR-ING ANDREAS ETTEMEYER ET AL: "KonstruktionselementeKapitel 14: Getriebe", INTERNET CITATION, 1. März 2007 (2007-03-01), XP002761386, Gefunden im Internet: URL:www.fb06.fh-muenchen.de/fb/index.php/d e/download?f_id=2301 [gefunden am 2016-09-01]

## Beschreibung

Die vorliegende Erfindung betrifft ein Verfahren und eine Vorrichtung zum Erzeugen von Steuerdaten zur Ausbildung eines Zahns einer Stirnradverzahnung durch fräsende Bearbeitung eines Werkstücks an einer zumindest 5 Achsen umfassenden, numerisch gesteuerten Werkzeugmaschine, insbesondere Universal-Werkzeugmaschine, durch sukzessives, insbesondere abzeilendes Abfahren von Bearbeitungsbahnen mit einem Fräswerkzeug der Werkzeugmaschine auf Grundlage der erzeugten Steuerdaten.

Insbesondere betrifft die vorliegende Erfindung ein Verfahren und eine Vorrichtung zum Erzeugen von Steuerdaten zur Ausbildung eines Zahns einer Stirnradverzahnung durch fräsende Bearbeitung eines Werkstücks an einer zumindest 5 Achsen umfassenden, numerisch gesteuerten Universal-Werkzeugmaschine wie z.B. einer Fräsmaschine, einer Universalfräsmaschine oder einem Bearbeitungszentrum, wobei die Zahnflanke entsprechend einer vorgegebenen Zahnflankengeometrie durch abzeilendes Verfahren eines Fräswerkzeugs der Werkzeugmaschine entlang der von den Steuerdaten vorgegebenen Bearbeitungsbahnen herausgearbeitet wird, um abzeilend Material von dem Werkstück zerspanend abzutragen und so eine Zahnflanke herauszuarbeiten.

Weiterhin betrifft die vorliegende Erfindung ein Verfahren und eine Vorrichtung zum Erzeugen von Steuerdaten zur Fertigung eines eine Verzahnung aufweisenden Werkstücks mit den Schritten Vorgeben von Verzahnungsinformationsdaten, Berechnen eines Modells des Werkstücks auf Grundlage der vorgegebenen Verzahnungsinformationsdaten, umfassend den Schritt Berechnen einer vorgegebenen Zahnflankengeometrie auf Grundlage der vorgegebenen Verzahnungsinformationsdaten, und Erzeugen von Steuerdaten zur Fertigung des Werkstücks, umfassend den Schritt Erzeugen von Steuerdaten zur Ausbildung zumindest eines Zahns einer Stirnradverzahnung auf dem Werkstück.

Weiterhin betrifft die vorliegende Erfindung eine numerisch gesteuerte, zumindest 5 Achsen umfassende Werkzeugmaschine, insbesondere Universal-Werkzeugmaschine wie z.B. eine Fräsmaschine, eine Universalfräsmaschine oder ein Bearbeitungszentrum, zum fräsenden Bearbeiten eines Werkstücks durch sukzessives, insbesondere abzeilendes Abfahren von Bearbeitungsbahnen mit einem Fräswerkzeug der Werkzeugmaschine auf Grundlage von erzeugten Steuerdaten, wobei die Werkzeugmaschine insbesondere eine Vorrichtung zum Erzeugen von Steuerdaten umfasst.

Schließlich betrifft die vorliegende Erfindung weiterhin ein Computerprogrammprodukt umfassend ein Computerprogramm, wobei das Computerprogramm in der Form einer Abfolge von Zuständen auf einem Speichermedium gespeichert ist, die Befehlen entspricht, die eingerichtet sind von einem Datenverarbeitungsmittel einer Datenverarbeitungseinrichtung verarbeitet zu werden, derart dass eine Vorrichtung zum Erzeugen von Steuerdaten gebildet wird.

### Hintergrund der Erfindung

Aus dem Stand der Technik ist es betreffend die Herstellung von eine Stirnradverzahnung aufweisenden Werkstücken herkömmlich bekannt, insbesondere Stirnräder oder andere eine Stirnradverzahnung aufweisende Werkstücke an speziellen zur Herausbildung einer Stirnradverzahnung vorgesehenen, verzahnungsbildenden Werkzeugmaschinen zu fertigen, den sogenannten verzahnungsbildenden Einzweckmaschinen. Diese Einzweckmaschinen sind von Universal-Werkzeugmaschinen zu unterscheiden.

Zum Beispiel sind im Stand der Technik als derartige verzahnungsbildende Einzweckmaschinen Wälzfräsmaschinen bzw. Wälzschleifmaschinen bekannt, an denen ein Zahnprofil an einem Werkstück herausgearbeitet wird, indem ein Profilwälzfräser oder eine Profilschleifscheibe derart gesteuert wird, dass Zahnflanken bzw. Zähne in dem Werkstück mittels einer Profilschleifscheibe oder eines Profilwälzfräswerkzeugs herausgearbeitet werden. Hierbei weisen die Profilwälzfräswerkzeuge oder Profilschleifscheiben bereits im Querschnitt eine Form gewöhnlich entsprechend der gewünschten Profilform der zu fertigenden Zahnflanken auf dem Werkstück auf. Indem das Wälzfräswerkzeug oder die Profilscheibe entlang einer Bahn durch das Werkstück gesteuert wird, entsteht hierbei eine oder je nach Werkzeugprofil auch gleich zwei gegenüberliegenden Zahnflanken, die das Profil entsprechend der Form des Werkzeugs aufweisen.

Die vorliegende Erfindung betrifft jedoch im Gegensatz zu den vorstehend genannten Verfahren an speziellen Verzahnungsmaschinen, d.h. Einzweckmaschinen, insbesondere speziellen Verzahnungsmaschinen wie z.B. Wälzfräsmaschinen bzw. Wälzschleifmaschinen, eine neu entwickelte Methode zur Herstellung von eine Verzahnung (insbesondere Stirnradverzahnung) aufweisenden Werkstücken an numerisch gesteuerten, zumindest 5 Achsen umfassenden Werkzeugmaschinen, insbesondere Universal-Werkzeugmaschinen wie zum Beispiel einer Fräsmaschine, einer Universalfräsmaschine oder einem Bearbeitungszentrum, bei der die Verzahnung auf dem Werkstück durch Standard-Fräswerkzeuge, wie zum Beispiel Schaftfräser mit oder ohne Endradius, in einer sukzessiven bzw. insbesondere abzeilenden Bearbeitung durch sukzessives bzw. insbesondere abzeilendes Abfahren von Bearbeitungsbahnen eine Zahnflanke aus dem Werkstück herausgearbeitet wird.

Eine derartige Herstellung eines eine Verzahnung aufweisenden Werkstücks auf sog. Standardmaschinen bzw. Universal-Werkzeugmaschinen, wie z.B. einer Fräsmaschine, einer Universalfräsmaschine oder einem Bearbeitungszentrum, wird zum Beispiel in dem Artikel "Auf einfachem Weg zu guten Zähnen - Zahnräder mit hoher Qualität auf Standardmaschinen fräsen" von Hans-Peter Schossig (erschienen in der Zeitschrift WERKSTATT UND BETRIEB, im Carl Hanser Verlag, München, Ausgabe 2007, Nr. 4/28, auf den Seiten 28 bis 32, ISSN 0043-2792) und ferner auch in der WO 2008/133517 A1 beschrieben. Ausgangspunkt der vorliegenden Erfindung ist diese neu entwickelte Methode und insbesondere deren Weiterentwicklungen, die von der Anmelderin selbst entwickelt wurden (siehe zum Beispiel die DE 10 2009 008 124).

### Zusammenfassung der Erfindung

Im Hinblick auf die vorstehend beschriebenen aus dem Stand der Technik bekannten Verfahren ist es eine Aufgabe der vorliegenden Erfindung, die Bearbeitung bzw. das Herstellen von eine Stirnradverzahnung aufweisenden Werkstücken weiter zu vereinfachen und die Möglichkeiten der fräsenden Bearbeitung eines Werkstücks an einer numerisch gesteuerten, zumindest 5 Achsen umfassenden Werkzeugmaschine, insbesondere Universal-Werkzeugmaschine wie zum Beispiel einer Fräsmaschine, einer Universalfräsmaschine, oder einem Bearbeitungszentrum, zu erweitern. Insbesondere ist es eine Aufgabe der vorliegenden Erfindung, ein Verfahren und eine Vorrichtung zum Erzeugen von Steuerdaten bereitzustellen, die die Anwendungsmöglichkeiten der neu entwickelten, unkonventionellen Verfahren zum Herstellen eines eine Verzahnung aufweisenden Werkstücks an einer Werkzeugmaschine, insbesondere Universal-Werkzeugmaschine, durch sukzessives bzw. abzeilendes Fräsen einer Zahnflanke auf dem Werkstück auf der Grundlage von erzeugten Steuerdaten zu erweitern. Insbesondere ist es eine weitere Aufgabe der vorliegenden Erfindung, es zu ermöglichen, ein eine Stirnradverzahnung aufweisendes Werkstück derart herzustellen, dass zumindest ein Zahn des Werkstücks auf einfache und effiziente Weise mit einer gewünschten Breitenballigkeit hergestellt werden kann.

Zur Lösung der vorstehend beschriebenen Aufgaben der vorliegenden Erfindung werden ein Verfahren zum Erzeugen von Steuerdaten zur Ausbildung eines Zahns einer Stirnradverzahnung gemäß Anspruch 1, ein Verfahren zum Erzeugen von Steuerdaten zur Fertigung eines eine Verzahnung aufweisenden Werkstücks gemäß Anspruch 12, eine Vorrichtung zum Erzeugen von Steuerdaten zur Ausbildung eines Zahns einer Stirnradverzahnung gemäß Anspruch 13, eine Vorrichtung zum Erzeugen von Steuerdaten zur Fertigung eines eine Stirnradverzahnung aufweisenden Werkstücks gemäß Anspruch 14, eine numerisch gesteuerte, zumindest 5 Achsen umfassende Werkzeugmaschine nach Anspruch 15 und ein Computerprogrammprodukt gemäß Anspruch 16 vorgeschlagen. Merkmale bevorzugter Ausführungsformen der vorliegenden Erfindung werden in den abhängigen Ansprüchen beschrieben.

Gemäß einem ersten Aspekt der vorliegenden Erfindung wir ein Verfahren zum Erzeugen von Steuerdaten zur Ausbildung eines Zahns einer Stirnradverzahnung durch fräsende Bearbeitung eines Werkstücks an einer zumindest 5 Achsen umfassenden, numerisch gesteuerten Werkzeugmaschine, insbesondere an einer Universal-Werkzeugmaschine wie z.B. an einer Fräsmaschine, an einer Universalfräsmaschine oder an einem Bearbeitungszentrum, durch sukzessives, insbesondere abzeilendes Abfahren von Bearbeitungsbahnen mit einem Fräswerkzeug der Werkzeugmaschine auf Grundlage der erzeugten Steuerdaten vorgeschlagen.

Das Verfahren umfasst erfindungsgemäß die Schritte Vorgeben einer Zahnflankengeometrie zumindest einer Zahnflanke des Zahns der Stirnradverzahnung, Festlegen von Parametern zur Veränderung der vorgegebenen Zahnflankengeometrie in Abhängigkeit einer gewünschten Breitenballigkeit des Zahns und Erzeugen von Steuerdaten auf Grundlage einer in Abhängigkeit der festgelegten Parameter veränderten Zahnflankengeometrie, wobei die veränderte Zahnflankengeometrie einer Zahnflankengeometrie eines Zahns mit der gewünschten Breitenballigkeit entspricht. Das Festlegen von Parametern zur Veränderung der vorgegebenen Zahnflankengeometrie umfasst ein Festlegen eines jeweiligen Rücknahmeparameters an einer oder mehreren festgelegten Rücknahmepositionen auf der zumindest einen Zahnflanke der vorgegebenen Zahnflankengeometrie.

Gemäß der vorliegenden Erfindung wird somit eine Zahnflankengeometrie vorgegeben, zum Beispiel eine mathematisch exakte bzw. theoretische Zahnflankengeometrie entsprechend vorgegebener, die Zahnflankengeometrie bestimmender Informationen bzw. Daten, wie zum Beispiel Informationen bzw. Daten betreffend Verzahnungsart (z.B. geradverzahnt, schrägverzahnt, bogenverzahnt, spiralverzahnt, oder ähnliche), Werkstückform und/oder Werkstückgeometrie, Verzahnungsform bzw. Profilform (z.B. Evolventenprofil, Zykloidprofil, Kreisbogenprofil, oder ähnliche) usw. Auf der Grundlage derartiger Informationen bzw. Daten kann eine mathematisch exakte bzw. theoretische Zahnflankengeometrie numerisch berechnet bzw. modelliert werden, zum Beispiel mittels eines CAD-Programms.

Jedoch werden die Steuerdaten gemäß der Erfindung nicht direkt auf Grundlage der vorgegebenen Zahnflankengeometrie bzw. auf Grundlage eines Modells der vorgegebenen Zahnflankengeometrie erzeugt, wie es zum Beispiel noch in der DE 10 2009 00814 vorgesehen war, sondern vielmehr werden zudem Parameter zur Veränderung der vorgegebenen Zahnflankengeometrie in Abhängigkeit einer gewünschten Breitenballigkeit des Zahns festgelegt.

Danach kann auf Grundlage der festgelegten Parameter zur Veränderung der vorgegebenen Zahnflankengeometrie in Abhängigkeit der vorgegebenen Zahnflankengeometrie eine modifizierte bzw. veränderte Zahnflankengeometrie berechnet werden, wobei erfindungsgemäß die Steuerdaten dann auf Grundlage der veränderten Zahnflankengeometrie erzeugt werden.

Somit ergibt sich der Vorteil, dass die Bearbeitung des Werkstücks an der Werkzeugmaschine auf Grundlage der Steuerdaten bereits entsprechend der veränderten Zahnflankengeometrie durchgeführt wird, so dass das fertige Werkstück nach der Bearbeitung an der Werkzeugmaschine zur Herausarbeiten der Zahnflanke(n) bereits eine Zahnflanke bzw. Zahnflanken mit einer tatsächlichen Zahnflankengeometrie entsprechend der veränderten Zahnflankengeometrie aufweist. Folglich weist das fertige Werkstück nach der Bearbeitung dann bereits einen oder mehre Zähne mit einer oder zwei modifizierten Zahnflanken auf, so dass das fertige Werkstück nach der Bearbeitung bereits einen Zahn oder mehrere Zähne mit der gewünschten Breitenballigkeit aufweist. Umständliche und zweitaufwändige Nachbearbeitungen der Zahnflanke(n) des Zahns bzw. der Zähne, zum Beispiel zum nachträglichen Herausarbeiten einer Breitenballigkeit sind nicht erforderlich. Vielmehr kann/können der Zahn bzw. die Zähne vorteilhaft direkt auf Grundlage der Steuerdaten derart herausgearbeitet werden, dass ohne erforderliches Nachbearbeiten bereits eine gewünschte Breitenballigkeit des Zahns bzw. der Zähne erreicht wird. Der Begriff "Breitenballigkeit" eines Zahns der Stirnradverzahnung meint hierbei, dass der Zahn der Stirnradverzahnung eine sich verändernde Zahnbreite aufweist, zum Beispiel, dass der Zahn zu einer oder beiden Außenseiten eine sich verjüngende Zahnbreite aufweist.

Die vorliegende Erfindung ermöglicht es somit auf einfache und effiziente Art und Weise, eine Zahnflankengeometrie eines Zahns einer Stirnradverzahnung, die einer mathematisch exakten bzw. theoretisch exakten Zahnflankengeometrie entspricht, bereits vor Erzeugen der Steuerdaten zu verändern bzw. zu modifizieren, zum Beispiel in Abhängigkeit einer gewünschten Breitenballigkeit.

Somit kann die Vielseitigkeit und die Anwendungsmöglichkeiten der neu entwickelten Verfahren zum Herstellen eines eine Verzahnung aufweisenden Werkstücks an einer zumindest 5 Achsen umfassenden, numerisch gesteuerten Werkzeugmaschine durch sukzessives, insbesondere abzeilendes Abfahren von Bearbeitungsbahnen in Zeilen an der Zahnflanke bzw. abzeilendes Bearbeiten der Zahnflanke mit einem Fräswerkzeug, wie zum Beispiel einem Schaftfräser oder ähnlicher Fräswerkzeuge, signifikant erhöht bzw. erweitert werden.

Insbesondere kann die Stirnradherstellung im Vergleich zu Verfahren mittels der bisher bekannten speziellen Verzahnungsmaschinen, wie z.B. Wälzfräsmaschinen bzw. Wälzschleifmaschinen, verbessert, vereinfacht und im Anwendungsbereich signifikant erweitert werden, da die Herstellung einer modifizierten Zahnflankengeometrie, die bereits die gewünschte Breitenballigkeit berücksichtigt, direkt auf Grundlage der erfindungsgemäß erzeugten Steuerdaten vorgenommen werden kann. Bei den vorstehend beschriebenen herkömmlichen Verfahren an speziellen Verzahnungsmaschinen, wie z.B. Wälzfräsmaschinen bzw. Wälzschleifmaschinen, wird eine Profilform des Zahns im Wesentlichen durch die Werkzeugform vorgegeben und zur Ausbildung einer Zahnflanke nur eine Bearbeitungsbahn (gegebenenfalls mehrfach) abgefahren, wodurch die Modellierung eines Zahns mit Breitenballigkeit limitiert ist und gegebenenfalls eine umständliche und aufwendige nachträgliche Bearbeitung der Zahnflanke erforderlich ist.

Vorzugsweise umfasst der Schritt Erzeugen von Steuerdaten die Berechnung eines Modells der geänderten Zahnflankengeometrie auf Grundlage der vorgegebenen Zahnflankengeometrie und der festgelegten Parameter, insbesondere vorzugsweise die Berechnung eines Modells des Zahns der Stirnradverzahnung auf Grundlage der vorgegebenen Zahnflankengeometrie und der festgelegten Parameter.

Dies hat den Vorteil, dass ein Modell der geänderten Zahnflankengeometrie vorliegt bzw. berechnet wird, das von dem Modell einer mathematisch exakten bzw. theoretischen Zahnflankengeometrie entsprechend der festgelegten Parameter zur Veränderung der vorgegebenen Zahnflankengeometrie abweicht, wobei auf Grundlage des Modells der geänderten Zahnflankengeometrie auf einfache und gegebenenfalls automatisierte Weise Steuerdaten, wie zum Beispiel ein NC-Programm bzw. Teile eines NC-Programms, auf Grundlage des Modells der geänderten Zahnflankengeometrie erzeugt werden können.

Vorzugsweise werden die Parameter zur Veränderung der vorgegebenen Zahnflankengeometrie derart festgelegt, dass ein die veränderte Zahnflankengeometrie aufweisender Zahn mit der gewünschten Breitenballigkeit resultiert.

Dass das Festlegen von Parametern zur Veränderung der vorgegebenen Zahnflankengeometrie ein Festlegen eines jeweiligen Rücknahmeparameters an einer oder mehreren festgelegten Rücknahmepositionen auf der zumindest einen Zahnflanke der vorgegebenen Zahnflankengeometrie umfasst, hat den Vorteil, dass zur Erzeugung der Steuerdaten zur Ausbildung einer Zahnflanke mit der gewünschten Breitenballigkeit auf einfache Weise lediglich jeweilige Rücknahmeparameter an der einen oder mehreren festgelegten Rücknahmepositionen angegeben, vorgegeben bzw. festgelegt werden müssen, um die gewünschte Breitenballigkeit für die Erzeugung der die gewünschte Breitenballigkeit berücksichtigenden Steuerdaten vorzugeben.

Vorzugsweise sind die eine oder mehreren Rücknahmepositionen auf einer Zahnflankenlinie auf der zumindest einen Zahnflanke festgelegt bzw. angeordnet, wobei die Zahnflankenlinie einer Schnittlinie zwischen einer Schnittfläche durch den Zahn und der zumindest einen Zahnflanke der vorgegebenen Zahnflankengeometrie entspricht.

Dies hat den Vorteil, dass die eine oder mehrere Rücknahmepositionen auf der Zahnflanke somit auf einer definierten Zahnflankenlinie angeordnet bzw. festgelegt sind und es folglich erlauben, die Breitenballigkeit durch das Vorgeben von Rücknahmeparametern an Positionen entlang einer Zahnflankenlinie festzulegen bzw. vorzugeben, insbesondere vorzugsweise entlang einer sich entlang der zumindest einen Zahnflanke in, Richtung der Zahntiefe erstreckenden Zahnflankenlinie.

Vorzugsweise ist die Schnittfläche durch den Zahn eine Schnittebene durch den Zahn, insbesondere eine horizontale Schnittebene durch den Zahn. Vorzugsweise tangiert die Schnittebene den Teilkreis der Stirnradverzahnung. Vorzugsweise tangiert die Schnittebene den Teilkreis insbesondere in einem mittigen Punkt der Schnittebene.

Somit ergibt sich der Vorteil, dass die Rücknahmeparameter entlang einer Zahnflankenlinie vorgegeben werden, die sich entlang der zumindest einen Zahnflanke in Richtung der Zahntiefe erstreckt, dabei im Wesentlichen in Zahntiefenrichtung einen gleichbleibenden Abstand zum Zahngrund bzw. Zahnkopf aufweist und zudem im Wesentlichen zu dem Zahnkopf und dem Zahngrund einen gleichen Abstand aufweist. Die Rücknahmeparameter können somit im Wesentlichen mittig auf der Zahnflanke im Wesentlichen auf halber Zahnhöhe festgelegt werden, das heißt insbesondere nahe oder auf Höhe des Teilkreises des Zahns der Stirnradverzahnung.

Nach einem alternativen vorteilhaften Ausführungsbeispiel erstreckt sich die Schnittfläche entlang einer zylinderförmigen Fläche, deren Mittelachse vorzugsweise koaxial mit der Drehachse der Stirnradverzahnung ausgerichtet ist. Vorzugsweise erstreckt sich die Schnittfläche entlang des Teilkreises des Zahns.

In diesem alternativen Ausführungsbeispiel wird es vorteilhaft ermöglicht, dass die Rücknahmepositionen, an denen die Rücknahmeparameter festgelegt werden, exakt auf halber Zahnhöhe festgelegt werden können, da die Rücknahmepositionen genau auf Höhe des Teilkreises definiert bzw. festgelegt werden können. Zudem werden die Rücknahmepositionen auf der Zahnflanke auf gleichbleibender Höhe, das heißt Entfernung zum Zahngrund bzw. zum Zahnkopf, festgelegt, insbesondere auf halber Höhe zwischen Zahngrund und Zahnkopf.

Vorzugsweise sind die eine oder mehrere Rücknahmepositionen im Wesentlichen auf Höhe des Teilkreises des Zahns festgelegt.

Vorzugsweise umfasst das Verfahren den weiteren Schritt Festlegen einer oder mehrerer Rücknahmepositionen auf der vorgegebenen Zahnflankengeometrie.

Dies hat den Vorteil, dass eine weitere Flexibilität erreicht werden kann, da nicht nur der Wert der Rücknahme der Zahnflanke zur Ausbildung der Breitenballigkeit durch Festlegen der Rücknahmeparameter ermöglicht ist, sondern die Anordnung der Rücknahmepositionen auf der vorgegebenen Zahnflankengeometrie festgelegt werden können.

Wenn die Rücknahmepositionen auf einer Zahnflankenlinie festgelegt bzw. angeordnet werden, kann der Schritt Festlegen der einen oder mehreren Rücknahmepositionen durch Festlegen jeweiliger einzelner Parameter pro Rücknahmeposition durchgeführt werden, zum Beispiel durch Festlegen jeweiliger Parameter, die die Abstände der jeweiligen Rücknahmeposition zu einer benachbarten Rücknahmeposition bzw. zum Zahnflankenrand beschreiben.

Vorzugsweise ist die veränderte Zahnflankengeometrie im Vergleich zu der vorgegebenen Zahnflankengeometrie an jeder der einen oder mehreren festgelegten Rücknahmepositionen entsprechend des jeweiligen festgelegten Rücknahmeparameters zurückgenommen. Somit ist es möglich durch Definition einer Rücknahme der Zahnflanke bzw. Zahnflankengeometrie an den Rücknahmepositionen eine Breitenballigkeit gemäß der gewünschten Breitenballigkeit vorzugeben.

Vorzugsweise wird die vorgegebene Zahnflankengeometrie derart verändert, dass das Zahnprofil der Zahnflanke an der einen oder den mehreren Rücknahmepositionen durch Rotation des Zahnprofils um die Mittelachse der Stirnradverzahnung entsprechend des jeweiligen festgelegten Rücknahmeparameters verschoben ist.

Dies hat den Vorteil, dass durch Angabe bzw. Festlegen eines Rücknahmeparameters an einer Rücknahmeposition bereits die Änderung des gesamten Zahnprofils an dieser Rücknahmeposition bestimmt werden kann, indem das Zahnprofil an dieser Rücknahmeposition entsprechend des jeweiligen festgelegten Rücknahmeparameters um die Mittelachse der Stirnradverzahnung rotiert wird, um das Profil an dieser Position zur Veränderung der Zahnflankengeometrie entsprechend zu verschieben.

Die veränderte Zahnflankengeometrie ergibt sich somit durch die an der einen bzw. den mehreren Rücknahmepositionen durch Rotation des jeweiligen Zahnprofils um die Mittelachse der Stirnradverzahnung entsprechend des jeweiligen festgelegten Rücknahmeparameters verschobenen Profile, wobei zwischen den einzelnen Rücknahmepositionen vorzugsweise eine gleichmäßige, kontinuierliche Zahnflankengeometrie interpoliert wird, derart, dass stets gleichmäßige bzw. kontinuierliche, vorteilhaft tangentiale Übergänge an den Rücknahmepositionen entstehen.

Dies hat den Vorteil, dass durch Angabe bzw. Festlegen weniger Rücknahmeparameter an festgelegten Rücknahmepositionen ein Algorithmus bereitgestellt werden kann, bei dem das Zahnflankenprofil an den Rücknahmepositionen durch einfache Rotation verschoben wird, und durch den die gesamte Zahnflankengeometrie nach der Veränderung somit durch nur wenige Parameter entsprechend einer gewünschten Breitenballigkeit vorgeben werden kann. Zum Beispiel kann durch einfaches Festlegen von Rücknahmeparametern an Rücknahmepositionen, die nur auf Höhe des Teilkreises angeordnet sind, bereits die Rücknahme entlang des gesamten Zahnprofils auf einfache Art und Weise ermittelt werden.

Vorzugsweise umfasst das Verfahren den weiteren Schritt Darstellen eines Modells der veränderten Zahnflankengeometrie.

Dies hat den Vorteil, dass die veränderte Zahnflankengeometrie optisch geprüft werden kann, um noch vor Erzeugen der Steuerdaten auf Grundlage des berechneten Modells die gegebenenfalls in weiteren Schritten zu korrigierenden Rücknahmeparameter festzulegen bzw. korrigierte Rücknahmepositionen festzulegen, bis das dargestellte Modell der veränderten Zahnflankengeometrie einer gewünschten veränderten Zahnflankengeometrie entspricht, d.h. entsprechend der gewünschten Breitenballigkeit, bevor dann auf Grundlage der gewünschten veränderten Zahnflankengeometrie mit gewünschter Breitenballigkeit die Steuerdaten erzeugt werden können.

Vorzugsweise umfasst der Schritt Vorgeben einer Zahnflankengeometrie Vorgegebenen von Verzahnungsinformationsdaten und Berechnen der vorgegebenen Zahnflankengeometrie auf Grundlage der vorgegebenen Verzahnungsinformationsdaten.

Vorzugsweise umfassen die Verzahnungsinformationsdaten Daten, die eine Größe und Form des Werksstücks angeben, Daten, die eine Verzahnungsform angeben, insbesondere eine Verzahnungsform aus den Verzahnungsformen Geradverzahnung, Schrägverzahnung und Bogenverzahnung, Daten, die eine Zahnflankenprofilform angeben, insbesondere eine Zahnflankenprofilform aus den Zahnflankenprofilformen Evolventenprofil, Zykloidprofil, und Kreisbogenprofil, Daten, die eine Größe und Form einer Zahngeometrie der Verzahnung angeben, und/oder Daten, die eine Zahl der Zähne der Verzahnung angeben.

Dies hat den Vorteil, dass die vorgegebene Zahnflankengeometrie auf einfache Art und Weise durch Vorgeben von Verzahnungsinformationsdaten vorgegeben werden kann, wobei für das Vorgeben der vorgegebenen Zahnflankengeometrie nur wenige Verzahnungsinformationsdaten vorgegeben bzw. festgelegt werden müssen. Zum Beispiel können die Verzahnungsinformationsdaten Daten umfassen, die die Größe und Form des Werkstücks angeben. Weiterhin können Verzahnungsinformationsdaten vorgegeben werden, die Daten umfassen, die die gewünschte Verzahnungsart angeben, zum Beispiel ob eine Geradverzahnung, Schrägverzahnung, Bogenverzahnung oder Spiralverzahnung hergestellt werden soll. Weiterhin können in den Verzahnungsinformationsdaten Daten enthalten sein, die eine gewünschte gegebenenfalls mathematisch exakte Zahnflankenprofilform angeben, insbesondere zum Beispiel eine Evolventenprofilform, eine Zykloidprofilform oder eine Kreisbogenprofilform. Weiterhin können die Verzahnungsinformationsdaten Daten enthalten, die eine Größe und Form der Zahngeometrie der Verzahnung angeben und/oder Daten, die eine Zahl der Zähne der Stirnradverzahnung angeben.

Insbesondere geben die Verzahnungsinformationsdaten vorzugsweise Daten an, die es ermöglichen die mathematisch exakte, gewünschte Zahnflankengeometrie zu berechnen, insbesondere durch Berechnen eines Modells der vorgegebenen Zahnflankengeometrie oder auch durch Berechnen eines Modells des fertigen Werkstücks mit Stirnradverzahnung, die einen oder mehrere Zähne aufweist, mit der vorgegebenen Zahnflankengeometrie.

Gemäß einem zweiten Aspekt der vorliegenden Erfindung wird ein Verfahren zum Erzeugen von Steuerdaten zur Fertigung eines eine Verzahnung aufweisenden Werkstücks vorgeschlagen, das die Schritte umfasst: Vorgeben von Verzahnungsinformationsdaten, Berechnen eines Modells des Werkstücks auf Grundlage der vorgegebenen Verzahnungsinformationsdaten, umfassend den Schritt Berechnen einer vorgegebenen Zahnflankengeometrie auf Grundlage der vorgegebenen Verzahnungsinformationsdaten, und Erzeugen von Steuerdaten zur Fertigung des Werkstücks, umfassend den Schritt Erzeugen von Steuerdaten zur Ausbildung eines Zahns einer Stirnradverzahnung auf dem Werkstück gemäß einem Verfahren des vorstehend beschriebenen ersten Aspekt, vorzugsweise einschließlich einer oder mehrerer der vorstehend beschriebenen bevorzugten Aspekte.

Gemäß einem dritten Aspekt der vorliegenden Erfindung wird eine Vorrichtung zum Erzeugen von Steuerdaten zur Ausbildung eines Zahns einer Stirnradverzahnung durch fräsende Bearbeitung eines Werkstücks an einer zumindest 5 Achsen umfassenden, numerisch gesteuerten Werkzeugmaschine, insbesondere an einer Universal-Werkzeugmaschine wie z.B. an einer Fräsmaschine, an einer Universalfräsmaschine oder an einem Bearbeitungszentrum, durch sukzessives Abfahren von Bearbeitungsbahnen mit einem Fräswerkzeug der Werkzeugmaschine auf Grundlage der erzeugten Steuerdaten gemäß einem Verfahren des vorstehend beschriebenen ersten Aspekts, vorzugsweise einschließlich einer oder mehrerer der vorstehend beschriebenen bevorzugten Aspekte, vorgeschlagen. Die Vorrichtung umfasst ein erstes Eingabemittel zum Vorgeben einer Zahnflankengeometrie zumindest einer Zahnflanke des Zahns der Stirnradverzahnung, ein zweites Eingabemittel zum Festlegen von Parametern zur Veränderung der vorgegebenen Zahnflankengeometrie in Abhängigkeit einer gewünschten Breitenballigkeit des Zahns und ein Steuerdatenerzeugungsmittel zum Erzeugen von Steuerdaten auf Grundlage einer in Abhängigkeit der festgelegten Parameter veränderten Zahnflankengeometrie.

Gemäß einem vierten Aspekt der vorliegenden Erfindung wird eine Vorrichtung zum Erzeugen von Steuerdaten zur Fertigung eines eine Verzahnung aufweisenden Werkstücks vorgeschlagen, mit einem Eingabemittel zum Vorgeben von Verzahnungsinformationsdaten, einem Modellberechnungsmittel zum Berechnen eines Modells des Werkstücks auf Grundlage der vorgegebenen Verzahnungsinformationsdaten, umfassend Berechnen einer vorgegebenen Zahnflankengeometrie auf Grundlage der vorgegebenen Verzahnungsinformationsdaten, und einem Steuerdatenerzeugungsmittel zum Erzeugen von Steuerdaten zur Fertigung des Werkstücks, umfassend Erzeugen von Steuerdaten zur Ausbildung eines Zahns einer Stirnradverzahnung auf dem Werkstück gemäß einem Verfahren des vorstehend beschriebenen ersten Aspekt, vorzugsweise einschließlich einer oder mehrerer der vorstehend beschriebenen bevorzugten Aspekte.

Die im Folgenden beschriebenen bevorzugten Ausführungsformen betreffen die vorstehend beschriebene Vorrichtung gemäß dem dritten oder vierten Aspekt der vorliegenden Erfindung.

Vorzugsweise umfasst die Vorrichtung ein Modellberechnungsmittel zum Berechnen eines Modells der geänderten Zahnflankengeometrie auf Grundlage der vorgegebenen Zahnflankengeometrie und der festgelegten Parameter, insbesondere zum Berechnen eines Modells des Zahns der Stirnradverzahnung auf Grundlage der vorgegebenen Zahnflankengeometrie und der festgelegten Parameter.

Vorzugsweise umfasst die Vorrichtung weiterhin ein drittes Eingabemittel zum Festlegen einer oder mehrerer Rücknahmepositionen auf der vorgegebenen Zahnflankengeometrie.

Vorzugsweise umfasst die Vorrichtung weiterhin ein Modelldarstellungsmittel zum Darstellen eines Modells der veränderten Zahnflankengeometrie. Das Darstellungsmittel ist vorzugsweise weiterhin dazu eingerichtet, ein Modell der vorgegebenen Zahnflankengeometrie darzustellen, eine Rohteilgeometrie des Werkstücks darzustellen, die eine Geometrie eines Rohteils des Werkstücks vor dem Herausarbeiten der Stirnradverzahnung angibt, und/oder eine Fertigteilgeometrie des Werkstücks darzustellen, die eine Geometrie eines Fertigteils des Werkstücks nach dem Herausarbeiten der Stirnradverzahnung angibt.

Vorzugsweise umfasst die Vorrichtung das Eingabemittel zum Vorgeben bzw. Festlegen der Verzahnungsinformationsdaten bzw. vorzugsweise umfasst das erste Eingabemittel weiterhin Eingabemittel vom Vorgeben von Daten, die eine Größe und Form bzw. Geometrie des Werkstücks angeben; Eingabemittel zum Vorgeben von Daten, die eine Verzahnungsform angeben, insbesondere eine Verzahnungsform aus den Verzahnungsformen Geradverzahnung, Schrägverzahnung, Bogenverzahnung oder Spiralverzahnung; Eingabemittel zum Vorgeben von Daten, die eine Zahnflankenprofilform angeben, insbesondere eine Zahnflankenprofilform aus den Zahnflankenprofilformen Evolventenprofil, Zykloidprofil und Kreisbogenprofil; Eingabemittel zum Vorgeben von Daten, die eine Größe und Form einer Zahngeometrie der Verzahnung angeben; und/oder Eingabemittel zum Vorgeben von Daten, die eine Zahl der Zähne der Stirnradverzahnung angeben.

Gemäß einem fünften Aspekt der vorliegenden Erfindung wird eine numerisch gesteuerte, zumindest 5 Achsen umfassende Werkzeugmaschine, insbesondere Fräsmaschine, Universalfräsmaschine oder Bearbeitungszentrum, zum fräsenden Bearbeiten eines Werkstücks durch sukzessives Abfahren von Bearbeitungsbahnen mit einem Fräswerkzeug der Werkzeugmaschine auf Grundlage von erzeugten Steuerdaten vorgeschlagen, umfassend eine Vorrichtung zum Erzeugen von Steuerdaten gemäß dem dritten oder vierten Aspekt.

Gemäß einem sechsten Aspekt der vorliegenden Erfindung wird ein Computerprogrammprodukt vorgeschlagen, das ein computerlesbares Medium und ein darin gespeichertes Computerprogramm umfasst, wobei das Computerprogramm in der Form einer Abfolge von Zuständen gespeichert ist, die Befehlen entspricht, die eingerichtet sind von einem Datenverarbeitungsmittel einer Datenverarbeitungseinrichtung verarbeitet zu werden, so dass eine Vorrichtung zum Erzeugen von Steuerdaten gemäß dem dritten oder vierten Aspekt gebildet wird.

### Kurzbeschreibung der Figuren

Fig. 1 zeigt eine beispielhafte schematische Darstellung eines Zahns einer Stirnradverzahnung auf einem Werkstück.
Fig. 2 zeigt beispielhaft einen Querschnitt des Zahns auf Fig. 1.
Fig. 3 zeigt beispielhaft schematisch eine Ansicht einer Schnittfläche durch den Zahn entlang der Schnittfläche A-A aus Fig. 2.
Fig. 4 zeigt beispielhaft schematisch eine Querschnittsansicht des Zahns zur Veranschaulichung der Verschiebung des Zahnprofils gemäß einem Ausführungsbeispiel der vorliegenden Erfindung.
Fig. 5 zeigt beispielhaft schematisch eine Querschnittsansicht des Zahns zur Veranschaulichung der Verschiebung des Zahnprofils gemäß einem weiteren Ausführungsbeispiel der vorliegenden Erfindung.
Fig. 6 illustriert eine rotierende Verschiebung eines Zahnprofils gemäß eines Ausführungsbeispiels der Erfindung.
Figs. 7A und 7B illustrieren beispielhaft eine vertikale Verschiebung eines Zahnprofils in Richtung der Zahnhöhe gemäß eines Ausführungsbeispiels der Erfindung.
Fig. 8A zeigt schematisch eine Vorrichtung zum Erzeugen von Steuerdaten nach einem Ausführungsbeispiel der vorliegenden Erfindung.
Fig. 8B zeigt schematisch ein Eingabemittel der Vorrichtung aus Fig. 8A.

### Ausführliche Beschreibung bevorzugter Ausführungsbeispiele der vorliegenden Erfindung

Im Folgenden werden bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet.

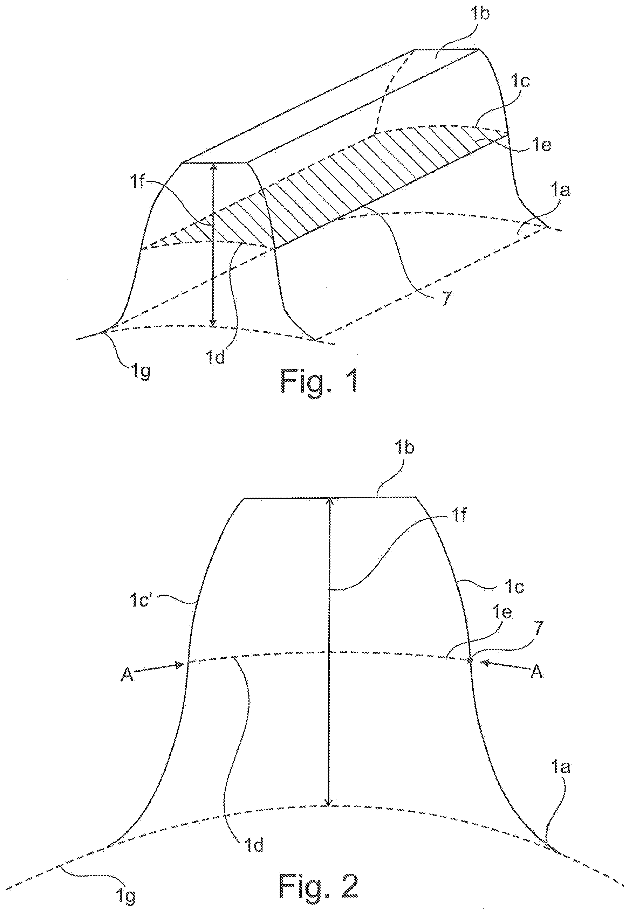

Fig. 1 zeigt schematisch einen beispielhaften Zahn 1 einer Stirnradverzahnung eines zu fertigenden Werkstücks, hier beispielhaft eine Geradverzahnung. Der Zahn 1 in Fig. 1 weist einen Zahngrund 1a, einen Zahnkopf 1b und Zahnflanken, insbesondere Zahnflanke 1c, auf, wobei sich zwischen dem Zahnkopf 1b und dem Zahngrund 1a die Zahnflanke 1c erstreckt, auf der bei dem späteren Betrieb des Stirnrads die Gegenflanke des Gegenstirnrads abrollt. Die Zahnflanke 1c wird oftmals auch als der verzahnungsaktive Bereich der Seite des Zahns 1 bezeichnet.

Die Zahnflanke 1c in Fig. 1 entspricht hierbei beispielhaft dem Bereich des Zahns 1, der ein exaktes Zahnflankenprofil entsprechend einer mathematisch vorgegebenen Zahnflankengeometrie aufweist. In den Bereichen des Zahnkopfes 1b und des Zahngrunds 1a kann die Form des Zahns 1 von der vorgegebenen Zahnflankengeometrie bzw. von dem vorgegebenen Zahnflankenprofil abweichen, so dass dieser Bereich im Folgenden nicht zur der Zahnflanke 1c gezählt wird, da im Folgenden davon ausgegangen wird, dass die Zahnflanke 1c im Profil das verzahnungsaktive vorgegebene Zahnflankenprofil aufweist.

Der Zahn 1 weist in Fig. 1 die Zahnflanke mit einer vorgegebenen Zahnflankengeometrie vor Veränderung der Zahnflankengeometrie auf. Die Zahnflanke 1c weist insbesondere über die gesamte Zahntiefe des Zahns 1 die gleiche mathematisch exakte Zahnprofilform auf, hier beispielhaft ein Evolventenprofil. Die Zahnbreite des Zahns 1 ist in Fig. 1 über die gesamte Zahntiefe konstant, d.h. der Zahn 1 weist in Fig. 1 noch keine Breitenballigkeit auf.

Es möglich, ein geometrisches Modell der Zahnflanke 1c einer Stirnradverzahnung zu berechnen, z.B. mittels eines CAD-Systems, insofern benötigte Verzahnungsinformationsdaten vorgegeben bzw. festgelegt werden. Hierzu können insbesondere die folgenden Daten benötigt werden, um ein mathematisches bzw. numerisches Modell der Zahnflanke 1c berechnen zu können:
- Daten, die eine Größe und Form des gesamten Werkstücks vor und/oder nach Bearbeitung (z.B. Daten zur Berechnung einer Rohteil- und/oder Fertigteilgeometrie bzw. eines Modells einer Rohteil- und/oder Fertigteilgeometrie) angeben,
- Daten, die eine Verzahnungsart angeben, insbesondere z.B. eine Verzahnungsform aus den möglichen Verzahnungsformen Geradverzahnung, Schrägverzahnung, Bogenverzahnung, Spiralverzahnung, oder andere,
- Daten, die eine Zahnflankenprofilform angeben, insbesondere z.B. eine Zahnflankenprofilform aus den Zahnflankenprofilformen Evolventenprofil, Zykloidprofil, und Kreisbogenprofil, oder andere,
- Daten, die eine Größe und/oder Form einer Zahngeometrie der Verzahnung angeben, insbesondere zum Beispiel Zahnhöhe, Zahnbreite, oder ähnliche Parameter, und/oder
- Daten, die eine Zahl der Zähne der Verzahnung angeben.

Aufgrund der vorstehend genannten Daten ist es dann auf einfache Weise möglich, ein mathematisch exaktes Modell eines eine Verzahnung aufweisenden Werkstücks zu berechnen, mit Zahnflanken bzw. einer Zahnflanke 1c, die einer exakten mathematischen Zahnflankengeometrie entspricht, die insbesondere im Profil genau die vorgegebene Zahnflankenprofilform aufweist, zum Beispiel eine Evolventenprofilform.

Ausgehend von einem derartigen berechneten Modell, zum Beispiel ein mittels eines CAD-Systems berechneten Modell, ist es weiterhin möglich, auf Grundlage des Modells Bahndaten zu berechnen, zum Beispiel zur Erzeugung eines NC-Programms bzw. Teilen eines NC-Programms z.B. mittels eines CAM- oder CAD/CAM-Systems, die in Steuerdaten umfasst sind, anhand derer ein Werkzeug, wie zum Beispiel ein Schaftfräser oder andere, an einer 5 Achsen aufweisenden, numerisch gesteuerten Werkzeugmaschine, zum Beispiel einer Fräsmaschine, einer Universalfräsmaschine oder einem Universalbearbeitungszentrum, gesteuert werden kann, um durch sukzessives, insbesondere abzeilendes Verfahren des Fräswerkzeugs entlang der Bearbeitungsbahnen sukzessive bzw. in Zeilen die Zahnflanke 1c auf dem Werkstück herauszuarbeiten. Hierbei sei insbesondere auf die Lehre der DE 10 2009 008 124 verwiesen, in der beschrieben ist, wie derartige Bearbeitungsbahnen auf Grundlage einer vorgegebenen Zahnflankengeometrie bevorzugt erzeugt werden können.

Erfindungsgemäß ist es nun vorgesehen, die Steuerdaten jedoch nicht auf Grundlage eines Modells einer vorgegebenen Zahnflankengeometrie zu erzeugen, die eine mathematisch exakte Zahnflankenprofilform bzw. Zahnflankengeometrie aufweist, sondern vielmehr ist es erfindungsgemäß vorgesehen, vor bzw. während des Erzeugens der Steuerdaten das Modell der Zahnflankengeometrie bzw. die vorgegebene Zahnflankengeometrie zu verändern bzw. zu modifizieren, um vorteilhaft eine Breitenballigkeit des Zahns noch vor der Erstbearbeitung des Werkstücks zu modellieren. Somit kann auf einfache und effiziente Weise eine bestimmte gewünschte Breitenballigkeit erreicht werden, ohne das Werkstück nach Bearbeitung an der Werkzeugmaschine zur Modellierung der Breitenballigkeit umständlich und zweitaufwendig nachbearbeiten zu müssen.

Das Modellieren der Breitenballigkeit bzw. das Verändern der vorgegebenen Zahnflankengeometrie zum Modellieren einer Breitenballigkeit wird im Folgenden unter Bezugnahme auf die Figuren 1 bis 5 gemäß beispielhafter Ausführungsbeispiele der vorliegenden Erfindung erläutert.

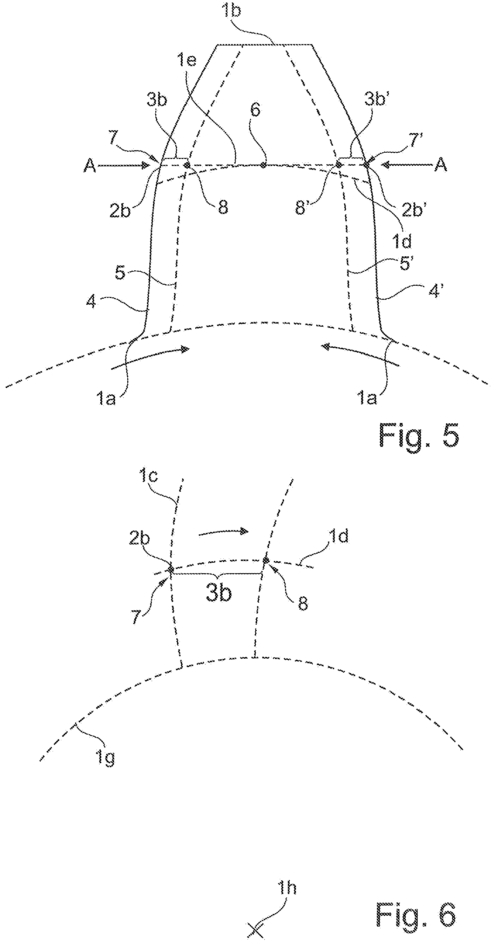

In Fig. 1 weist der Zahn 1 eine Zahnhöhe 1f auf, wobei auf halber Höhe der Zahnhöhe 1f der Teilkreis 1d definiert ist, der somit einem Kreis um die Mittelachse der Stirnradverzahnung entspricht, mit dem Radius entsprechend der Summe aus Radius des Stirnradgrundkörpers plus die halbe Zahnhöhe 1f des Zahns 1. Auf Höhe des Teilkreises ist in dem Zahn eine Schnittfläche 1e dargestellt, die beispielhaft einer Schnittfläche durch den Zahn 1 entlang einer zylinderförmigen Fläche auf Höhe des Teilkreises entspricht, wobei die Mittelachse der zylinderförmigen Fläche koaxial mit der Drehachse der Stirnradverzahnung ausgerichtet ist. Die Schnittfläche 1e erstreckt sich somit in diesem Ausführungsbeispiel der vorliegenden Erfindung entlang des Teilkreises 1d. Jedoch ist die vorliegende Erfindung nicht auf zylinderförmige Schnittflächen begrenzt, siehe zum Beispiel das Ausführungsbeispiel, das im Folgenden unter Bezugnahme auf die Fig. 5 beschrieben wird.

Die Schnittfläche 1e definiert mit der Zahnflanke 1c eine geradlinige Flankenlinie 7 auf Höhe des Teilkreises 1d, d.h. auf halber Höhe zwischen Zahngrund 1a und Zahnkopf 1b.

Fig. 2 zeigt beispielhaft schematisch einen Querschnitt durch den Zahn 1 aus Fig. 1. Hierbei handelt es sich um den Zahn 1 mit einer Zahnflanke 1c entsprechend der vorgegebenen Zahnflankengeometrie. Das Bezugszeichen 1g bezeichnet den Verlauf des Grundkörpers des Stirnrads, d.h. der Kreis auf Höhe der jeweiligen Zahngründe 1a. Die der Zahnflanke 1c entgegengesetzte Zahnflanke 1c' des gleichen Zahns 1 ist ebenfalls dargestellt.

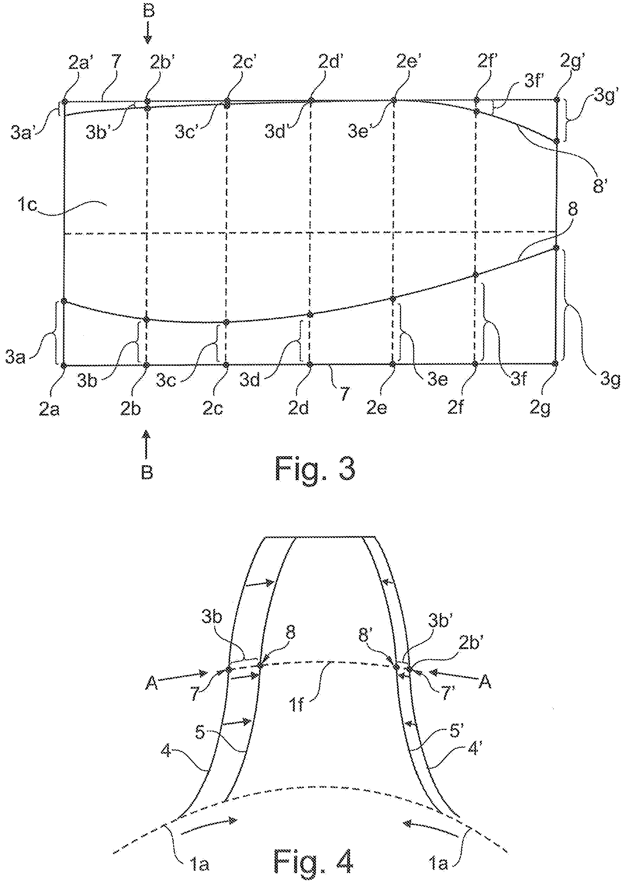

Fig. 3 zeigt beispielhaft schematisch eine Ansicht der Schnittfläche 1e entlang der Schnittlinie A-A in Fig. 2, die hier beispielhaft keiner Geraden, sondern einem Kreisbogen entlang des Teilkreises entspricht.

Auf der Flankenlinie 7 sind Rücknahmepositionen 2a, 2b, 2c, 2d, 2e, 2f und 2g festgelegt. Diese können vorfestgelegt werden, oder ebenfalls durch einen Benutzer vorgegeben werden, indem Parameter zum Vorgeben der Rücknahmepositionen entlang der Zahnflankenlinie 7 eingegeben werden. Dies können zum Beispiel die Abstände zwischen den Rücknahmepositionen 2a bis 2g zu benachbarten Rücknahmepositionen sein, oder die jeweiligen Abstände zu den Außenseiten der Zahnflankenlinie 7, das heißt zu den Rücknahmepositionen 2a oder 2g.

An den jeweiligen Rücknahmepositionen 2a bis 2g sind jeweilige Rücknahmeparameter 3a bis 3g festgelegt bzw. vorgegeben, die eine Rücknahme der Zahnflanke bzw. der Zahnflankelinie 7 auf Höhe des Teilkreises vorgeben bzw. festlegen.

Somit ergibt sich auf Höhe des Teilkreises eine vorgegebene Rücknahme entsprechend der Flankenlinie 8. Die Flankenlinie 8 ist hierbei vorzugsweise eine interpolierte Kurve durch die durch die Rücknahmeparameter definierten Punkte, so dass die Übergänge gleichmäßig kontinuierlich und insbesondere tangential verlaufen.

Analog sind auf der entgegengesetzten Seite auf der Zahnflanke 1c' entlang der Zahnflankenlinie 7' Rücknahmepositionen 2a' bis 2g' festgelegt, an denen wieder jeweilige Rücknahmeparameter 3a' bis 3g' festgelegt bzw. vorgegeben sind. Somit ergeben sich auch hier Punkte für eine entsprechend der Rücknahmeparameter zurückgenommenen, veränderten Zahnflankenlinie 8'.

Auf Höhe des Teilkreises definieren die so erhaltenen Zahnflankenlinien 8 und 8' den Verlauf der veränderten Zahnflankengeometrie. Somit werden nach diesem Ausführungsbeispiel der vorliegenden Erfindung lediglich auf Höhe des Teilkreises Parameter zur Veränderung der Zahnflankengeometrie festgelegt. Die Veränderung der gesamten Zahnflankengeometrie erfolgt auf einfache und effiziente Weise durch einen Algorithmus, wie er im Folgenden unter Bezugnahme auf Fig. 4 erläutert wird.

Fig. 4 zeigt schematisch eine weitere Profilansicht des Zahns 1 entlang der Schnittlinie B-B in Fig. 3.

Wie bereits in Fig. 3 gezeigt, wird die Rücknahme der jeweiligen Zahnflanken 1c und 1c' beispielhaft auf Höhe des Teilkreises definiert bzw. vorgegeben durch Festlegen der Rücknahmeparameter 3b und 3b' an den festgelegt Rücknahmepositionen 2b und 2b'. Die Schnittpunkte der Flankenlinien 7, 8, 7' und 8' sind ebenfalls dargestellt.

Das Bezugszeichen 4 kennzeichnet das Zahnflankenprofil der Zahnflanke 1c und das Bezugszeichen 4' kennzeichnet das Zahnflankenprofil der Zahnflanke 1c'.

Die geänderte Zahnflankengeometrie der Zahnflanken 1c und 1c' wird nun erhalten, indem die Zahnflankenprofile 4 und 4' entsprechend der an den Rücknahmepositionen 2b und 2b' festgelegten Rücknahmeparameter 3b und 3b' in Richtung der Pfeile in Fig. 4 rotiert bzw. rotierend verschoben werden durch Rotation um die Mittelachse der Stirnradverzahnung bis die jeweiligen Zahnflankenprofile durch die geänderten Zahnflankenlinien 8 bzw. 8' verlaufen.

Somit kann durch einfache rotatorische Verschiebung des Profils an den Rücknahmepositionen auf einfache Art und Weise durch Angabe eines jeweilgen Rücknahmeparameters das gesamte Profil verschoben werden.

Durch die Rotation bzw. rotatorische Verschiebung des Zahnflankenprofils ergibt sich insbesondere der Vorteil, dass ein späteres Laufverhalten des Stirnrads trotz Herausarbeiten der Breitenballigkeit weiterhin optimal ist. Bei geringer Last wälzen sich die Zähne der Stirnradverzahnung jeweils nur entlang einer Linie auf dem Zahnflankenprofil ab, welches der Position der kleinsten Rotation bzw. des kleinsten Rücknahmeparameters entspricht. Bei steigender Last wird die Zahnflanke im Allgemeinen entsprechend der Last verformt, wobei die stärker entsprechend größerer Rücknahmeparameter rotierten Zahnflankenprofilabschnitte durch die Verformung in Kontakt mit dem Gegenrad kommen. Aufgrund der rotatorischen Verschiebung gemäß Fig. 4 bleibt hierbei vorteilhaft trotz Breitenballigkeit weiterhin ein optimales Abwälzen bzw. Abwälzverhalten der Stirnräder gewährleistet.

Beispielhaft werden in diesem Ausführungsbeispiel die Rücknahmeparameter auf Höhe des Teilkreises festgelegt. Die vorliegende Erfindung ist jedoch nicht darauf beschränkt, dass die Rücknahmeparameter auf Höhe des Teilkreises festgelegt werden, vielmehr können die Rücknahmeparameter an Rücknahmepositionen auf anderer Höhe, insbesondere beispielsweise auf Höhe des Zahngrunds bzw. auf Höhe des Zahnkopfes festgelegt werden.

Fig. 5 zeigt ein alternatives Ausführungsbeispiel zu dem Ausführungsbeispiel gemäß Fig. 4. Fig. 5 zeigt beispielhaft einen Querschnitt durch einen Zahn 1, wobei die Schnittfläche 1e, die zusammen mit der Zahnflanke 1c die Flankenlinie 7 und mit der Zahnflanke 1c' die Zahnflankenlinie 7' definiert, eine Schnittebene ist, die den Teilkreis in einem Punkt 6 mittig tangiert und somit horizontal, d.h. bei gleich bleibender Höhe durch den Zahn 1 verläuft.

Wie in Fig. 5 ersichtlich, werden hierbei die Rücknahmepositionen 2b und 2b' nicht exakt auf Höhe des Teilkreises, aber immer noch im Wesentlichen auf Höhe des Teilkreises definiert. Der Algorithmus zum rotatorischen Verschieben des Zahnflankenprofils an den jeweiligen Rücknahmepositionen erfolgt analog zu dem vorhergehenden Ausführungsbeispiel gemäß Fig. 4.

Fig. 6 illustriert eine rotierende Verschiebung eines Zahnprofils gemäß eines Ausführungsbeispiels der Erfindung, wie z.B. bei den Profilverschiebungen gemäß Fig. 4 und Fig. 5 vorgesehen ist. Das Bezugszeichen 1g bezeichnet die Außenlinie des zylinderförmigen Grundkörpers eines Modells eines Stirnrads und 1d bezeichnet den Teilkreis der zu fertigenden Stirnradverzahnung. An einer Rücknahmeposition 2b, hier analog zu Fig. 4 beispielhaft auf Höhe des Teilkreises, wird eine Rüchnahme der Zahnflanke 1c durch einen Rücknahmeparameter 3b vorgeben bzw. festgelegt. Die Veränderung der Zahnflankengeometrie an der Rücknahmeposition 2b wird nun durch die vorstehend beschriebene rotierende Verschiebung des Zahnprofils um die Mittelachse 1h der Stirnradverzahnung bzw. des Stirnrads entsprechend des vorgegebenen Rücknahmeparameters 3b vorgenommen.

Vorstehend wurden Ausführungsbeispiele der vorliegenden Erfindung beschrieben, die eine "seitliche" Verschiebung des Zahnprofils durch Rotation des Profils um die Mittelachse des Stirnradgrundkörpers an festgelegten Rücknahmepositionen entsprechend jeweiliger festgelegter Rücknahmeparameter. Unabhängig davon bzw. auch zusätzlich dazu, d.h. unabhängig oder überlagernd zu der "seitlichen" Profilverschiebung, kann weiterhin eine Verschiebung des Zahnprofils in vertikaler Richtung des Zahns, d.h. in Richtung der Zahnhöhe bzw. radial zur Mittelachse des Stirnradgrundkörpers, erfolgen.

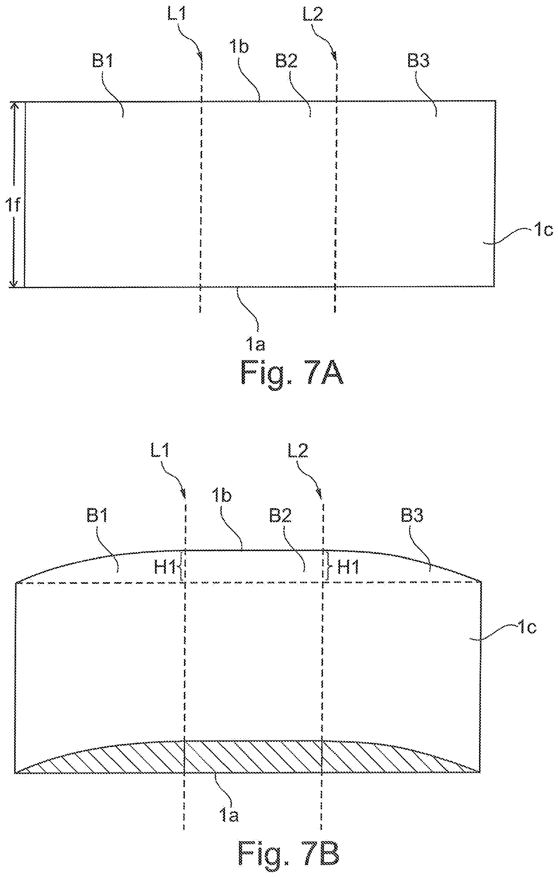

Fig. 7A und Fig. 7B illustrieren beispielhaft eine derartige vertikale Verschiebung eines Zahnprofils in Richtung der Zahnhöhe gemäß eines Ausführungsbeispiels der Erfindung. Fig. 7A zeigt eine Vorderansicht eines Modells einer Zahnflanke 1c eines Zahns 1 einer Stirnradverzahnung (siehe z.B. Fig. 1). Der Zahn 1 weist eine Zahnhöhe 1f auf. Die Bezugszeichen 1a und 1b bezeichnen wieder Zahngrund 1a und Zahnkopf 1b. Für die vertikale Verschiebung des Zahnprofils werden nun Parameter zur Veränderung der vorgegebenen Zahnflankengeometrie festgelegt bzw. vorgegeben. Beispielhaft wird die Zahnflanke 1c mittels der vertikalen Linien L1 und L2 (bzw. Schnittflächen L1 und L2 senkrecht zur Zeichnungsebene) in drei Bereiche B1, B2 und B3 unterteilt. Fig. 7B illustriert eine vertikale Verschiebung des Zahnprofils durch Vorgabe eines Höhenparameters H1 an den Grenzen der Bereiche B1 und B2 an L1 bzw. B2 und B3 an L2. Das Profil in dem mittleren Bereich B2 wird um den Höhenparameter H1 vertikal verschoben.

In den Bereichen B1 und B2 wird das Zahnprofil derart vertikal verschoben, dass die Zahnhöhe nach außen abnimmt, z.B. entsprechend eines Kreisbogens (oder eines Ellipsenbogens oder einer Kurve entsprechend einer vorgegebenen mathematischen Funktion) der an den Bereichsgrenzen B1 zu B2 an L1 bzw. B3 zu B2 an L2 tangential übergeht. Die Zahnflanke 1c wird somit verändert und es ergibt sich eine veränderte Zahnflankengeometrie. In dem schraffierten Bereich in Fig. 7B unterhalb der veränderten Zahnflanke 1c bis zum Zahngrund 1a kann die der Zahn 1 eine beliebige Geometrie aufweisen, z.B. eine Fortführung des Zahnprofils oder einen Radius, der mittels eines Schaftfräsers mit Endradius gefräst wird.

Alternativ zu der Vorgabe der Positionen der Bereichsübergänge B1 zu B2 an L1 bzw. B3 zu B2 an L2 und des Höhenparameters H1 können alternativ auch ein (symmetrisch für beide Bereiche B1 und B3) oder zwei Radiusparameter (asymmetrisch, d.h. unabhängig für die Bereiche B1 und B3) für die kreisbogenförmige Zahnhöhenreduktion in den Bereichen B1 und B3 vorgegeben bzw. festgelegt werden, durch die die vertikale Verschiebung des Profils entsprechend der Fig. 7B festgelegt werden kann.

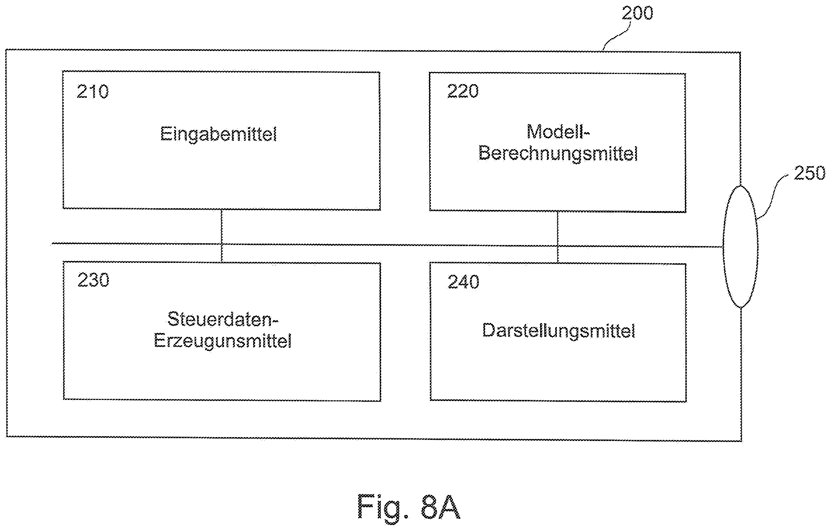

Fig. 8A zeigt schematisch eine Vorrichtung 200 zum Erzeugen von Steuerdaten zur Fertigung eines eine Stirnradverzahnung aufweisenden Werkstücks bzw. zum Erzeugen von Steuerdaten nach einem Ausführungsbeispiel der vorliegenden Erfindung. Die Vorrichtung 200 ist geeignet zum Erzeugen von Steuerdaten zur Ausbildung eines Zahns bzw. einer Zahnflanke durch fräsende Bearbeitung eines Werkstücks an einer zumindest 5 Achsen umfassenden, numerisch gesteuerten Werkzeugmaschine, insbesondere an einer Fräsmaschine, an einer Universalfräsmaschine oder an einem Bearbeitungszentrum, durch sukzessives Abfahren von Bearbeitungsbahnen mit einem Fräswerkzeug der Werkzeugmaschine auf Grundlage der erzeugten Steuerdaten. Die Vorrichtung kann Teil der Werkzeugmaschine sein, das heißt in der Werkzeugmaschine umfasst sein, oder zumindest fest mit dieser verbunden sein, oder auch separat von der Werkzeugmaschine bereitgestellt werden.

Die Vorrichtung kann durch ein oder mehrere Datenverarbeitungsmittel, wie zum Beispiel durch einen oder mehrere Computer bzw. computerähnliche Datenverarbeitungsmittel gebildet sein. Die Vorrichtung 200 umfasst ein Eingabemittel 210 zum Eingeben von Daten, Parametern, Informationen oder Ähnlichem, insbesondere zum Vorgeben von Verzahnungsinformationsdaten, und ein Modellberechnungsmittel 220 zum Berechnen eines Modells des Werkstücks auf Grundlage der vorgegebenen Verzahnungsinformationsdaten, insbesondere zum Berechnen eines Modells einer vorgegebenen Zahnflankengeometrie auf Grundlage der vorgegebenen Verzahnungsinformationsdaten.

Weiterhin umfasst die Vorrichtung 200 ein Steuerdatenerzeugungsmittel 230 zum Erzeugen von Steuerdaten zur Fertigung des Werkstücks, insbesondere zum Erzeugen von Steuerdaten zur Ausbildung eines Zahns einer Stirnradverzahnung auf dem Werkstück an der numerisch anhand der Steuerdaten gesteuerten Werkzeugmaschine.

Weiterhin umfasst die Vorrichtung 200 gemäß dieses beispielhaften Ausführungsbeispiels ein Darstellungsmittel 240 zum Darstellen eines Modells der veränderten Zahnflankengeometrie, zum Darstellen eines Modells der vorgegebenen Zahnflankengeometrie, zum Darstellen eine Rohteilgeometrie des Werkstücks, die eine Geometrie eines Rohteils des Werkstücks vor dem Herausarbeiten der Stirnradverzahnung angibt, und zum Darstellen einer Fertigteilgeometrie des Werkstücks, die eine Geometrie eines Fertigteils des Werkstücks nach dem Herausarbeiten der Verzahnung angibt.

Weiterhin umfasst die Vorrichtung 200 ein Schnittstellenmittel 250, mittels dessen die Vorrichtung zum Beispiel zum Übertragen der Steuerdaten an die Werkzeugmaschine bzw. an die Werkzeugmaschinensteuerungseinrichtung der Werkzeugmaschine angeschlossen bzw. verbunden werden kann, zum Beispiel per Kabelverbindung oder auch durch eine kabellose Verbindung wie zum Beispiel WLAN. Das Schnittstellenmittel kann auch dazu geeignet sein, von der Vorrichtung 200 erzeugte Steuerdaten auf ein Speichermedium zu speichern, zum Beispiel auf einem USB-Speicherstick oder einer Flash Memory Speicherkarte oder anderen Speichermedien, wobei das Speichermedium danach zur Übertragung der Steuerdaten an die Werkzeugmaschine mit der Werkzeugmaschine verbunden werden kann.

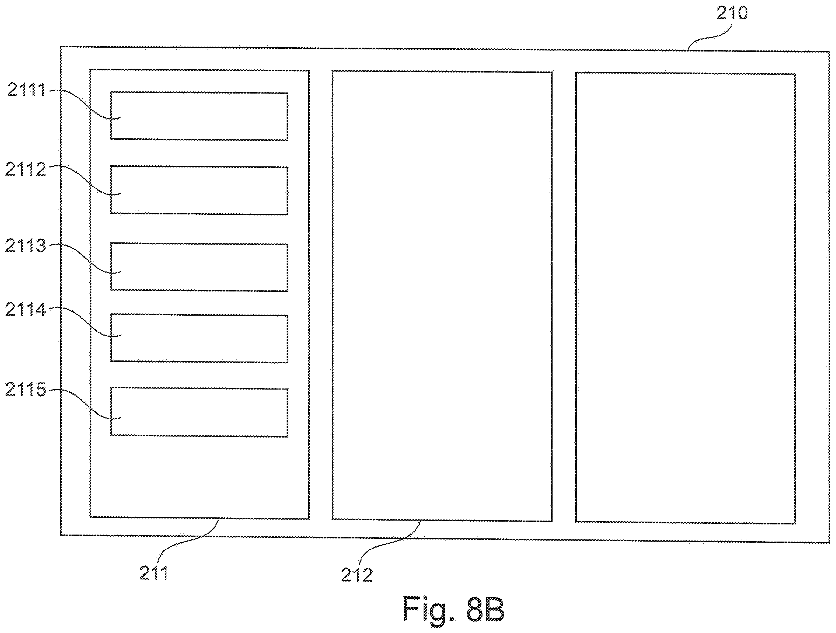

Fig. 8B zeigt schematisch ein beispielhaftes Ausführungsbeispiel des Eingabemittels 210 der Vorrichtung 200 aus Fig. 8A. Das Eingabemittel 210 umfasst ein erstes Eingabemittel 211 zum Festlegen bzw. Vorgeben einer Zahnflankengeometrie (vorgegebene Zahnflankengeometrie), ein zweites Eingabemittel 212 zum Festlegen bzw. Vorgeben von Rücknahmeparametern und ein drittes Eingabemittel 213 zum Festlegen bzw. Vorgeben von Rücknahmepositionen. Hierbei bilden das zweite und das dritte Eingabemittel 212 und 213 das Eingabemittel zum Festlegen bzw. Vorgeben von Parametern zur Veränderung der vorgegebenen Zahnflankengeometrie.

Das erste Eingabemittel zum Festlegen bzw. Vorgeben einer Zahnflankengeometrie bzw. zum Festlegen einer gesamten Werkstückgeometrie umfasst ein Eingabemittel 2111 zum Vorgeben von Daten, die eine Größe und Form bzw. Geometrie des Werkstücks angeben, ein Eingabemittel 2112 zum Vorgeben von Daten, die eine Verzahnungsform der Stirnradverzahnung angeben, insbesondere eine Verzahnungsform aus den Verzahnungsformen Geradeverzahnung, Schrägverzahnung, Bogenverzahnung und Spiralverzahnung, ein Eingabemittel 2113 zum Vorgeben von Daten, die eine Zahnflankenprofilform angeben, insbesondere eine Zahnflankenprofilform aus den Zahnflankenprofilformen Evolventenprofil, Zykloidprofil und Kreisbogenprofil, ein Eingabemittel 2114 zum Vorgeben von Daten, die eine Größe und Form einer Zahngeometrie der Verzahnung angeben, und ein Eingabemittel 2115 zum Vorgeben von Daten, die eine Zahl der Zähne der Verzahnung angeben.

Auf Grundlage der an dem Eingabemittel 210 eingegebenen bzw. vorgegebenen Verzahnungsinformationen kann das Modellberechnungsmittel 220 ein Modell des Werkstücks mit Verzahnung und insbesondere ein Modell der vorgegebenen bzw. veränderten Zahnflankengeometrie bzw. Zahnflankengeometrien berechnen. Auf Grundlage des berechneten Modells berechnet das Steuerdatenerzeugungsmittel 230 Bahndaten für ein Fräswerkzeug um sukzessiven bzw. abzeilenden, fräsenden Herausarbeiten der Zahnflanke des Zahns der Stirnradverzahnung entsprechend der veränderten Zahnflankengeometrie. Auf Grundlage der berechneten Bahndaten ist es dann möglich, die Steuerdaten, zum Beispiel in der Form eines NC-Programms oder Teile eines NC-Programms, numerisch bzw. automatisch zu erzeugen.

Zusammenfassend wird durch die vorliegende Erfindung die Bearbeitung bzw. das Herstellen von eine Stirnradverzahnung aufweisenden Werkstücken verbessert und weiter vereinfacht und außerdem wird es ermöglicht, die Möglichkeiten der fräsenden Bearbeitung eines Werkstücks an einer numerisch gesteuerten, zumindest 5 Achsen umfassenden Werkzeugmaschine, wie zum Beispiel einer Fräsmaschine, einer Universalfräsmaschine oder einem Bearbeitungszentrum zu erweitern. Insbesondere ermöglicht es die vorliegende Erfindung, ein Verfahren und eine Vorrichtung zum Erzeugen von Steuerdaten bereitzustellen, die die Möglichkeiten der neu entwickelten Verfahren zum Herstellen eines eine Verzahnung aufweisenden Werkstücks an einer Werkzeugmaschine durch sukzessives bzw. abzeilendes Fräsen einer Zahnflanke auf dem Werkstück mittels eines Fräswerkzeugs, wie zum Beispiel eines Schaftfräsers oder ähnlicher Fräswerkzeuge, auf der Grundlage von erzeugten Steuerdaten signifikant zu erweitern. Schließlich ermöglicht es die vorliegende Erfindung, ein eine Stirnradverzahnung aufweisendes Werkstück derart herzustellen, dass zumindest ein Zahn der Stirnradverzahnung des Werkstücks auf einfache und effiziente Weise mit einer gewünschten Breitenballigkeit hergestellt werden kann, insbesondere ohne eine erforderliche Nachbearbeitung.

## Patentansprüche

1. Verfahren zum Erzeugen von Steuerdaten zur Ausbildung eines eine gewünschte Breitenballigkeit aufweisenden Zahns einer Stirnradverzahnung durch fräsende Bearbeitung eines Werkstücks an einer zumindest 5 Achsen umfassenden, numerisch gesteuerten Werkzeugmaschine, insbesondere an einer Universal-Werkzeugmaschine, durch sukzessives Abfahren von Bearbeitungsbahnen mit einem Fräswerkzeug der Werkzeugmaschine auf Grundlage der erzeugten Steuerdaten, mit den Schritten:
- Vorgeben einer Zahnflankengeometrie zumindest einer Zahnflanke des Zahns der Stirnradverzahnung,
- Festlegen von Parametern zum Vorgeben einer Veränderung der vorgegebenen Zahnflankengeometrie in Abhängigkeit der gewünschten Breitenballigkeit des Zahns, wobei das Festlegen von Parametern zur Veränderung der vorgegebenen Zahnflankengeometrie ein Festlegen eines jeweiligen Rücknahmeparameters an einer oder mehreren festgelegten Rücknahmepositionen auf der zumindest einen Zahnflanke der vorgegebenen Zahnflankengeometrie umfasst, und
- Erzeugen von Steuerdaten auf Grundlage einer in Abhängigkeit der festgelegten Parameter veränderten Zahnflankengeometrie, wobei die veränderte Zahnflankengeometrie einer Zahnflankengeometrie des die gewünschte Breitenballigkeit aufweisenden Zahns entspricht.

2. Verfahren nach Anspruch 1, **dadurch gekennzeichnet, dass** der Schritt Erzeugen von Steuerdaten die Berechnung eines Modells der geänderten Zahnflankengeometrie auf Grundlage der vorgegebenen Zahnflankengeometrie und der festgelegten Parameter umfasst, insbesondere die Berechnung eines Modells des Zahns der Stirnradverzahnung auf Grundlage der vorgegebenen Zahnflankengeometrie und der festgelegten Parameter.

3. Verfahren nach Anspruch 1 oder 2, **dadurch gekennzeichnet, dass** die Parameter zur Veränderung der vorgegebenen Zahnflankengeometrie derart festgelegt werden, dass ein die veränderte Zahnflankengeometrie aufweisender Zahn mit der gewünschten Breitenballigkeit resultiert.

4. Verfahren nach zumindest einem der vorhergehenden Ansprüche, **dadurch gekennzeichnet, dass** die eine oder mehreren Rücknahmepositionen auf einer Zahnflankenlinie auf der zumindest einen Zahnflanke festgelegt sind, wobei die Zahnflankenlinie einer Schnittlinie zwischen einer Schnittfläche durch den Zahn und der zumindest einen Zahnflanke der vorgegebenen Zahnflankengeometrie entspricht.

5. Verfahren nach Anspruch 4, **dadurch gekennzeichnet, dass**
die Schnittfläche durch den Zahn eine Schnittebene durch den Zahn ist, insbesondere eine horizontale Schnittebene durch den Zahn, oder
dass sich die Schnittfläche entlang einer zylinderförmigen Fläche erstreckt, deren Mittelachse koaxial mit der Drehachse der Stirnradverzahnung ausgerichtet ist, wobei sich die Schnittfläche insbesondere entlang des Teilkreises des Zahns erstreckt.

6. Verfahren nach Anspruch 5, **dadurch gekennzeichnet, dass** die Schnittebene den Teilkreis der Stirnradverzahnung tangiert, den Teilkreis insbesondere in einem mittigen Punkt der Schnittebene tangiert.

7. Verfahren nach zumindest einem der Ansprüche 1 bis 6, **dadurch gekennzeichnet, dass** die eine oder mehreren Rücknahmepositionen im Wesentlichen auf Höhe des Teilkreises des Zahns festgelegt sind.

8. Verfahren nach zumindest einem der Ansprüche 1 bis 7, **gekennzeichnet durch** den weiteren Schritt Festlegen einer oder mehrerer Rücknahmepositionen auf der vorgegebenen Zahnflankengeometrie.

9. Verfahren nach zumindest einem der Ansprüche 1 bis 8, **dadurch gekennzeichnet, dass** die veränderte Zahnflankengeometrie im Vergleich zu der vorgegebenen Zahnflankengeometrie an jeder der einen oder mehreren festgelegten Rücknahmepositionen entsprechend des jeweiligen festgelegten Rücknahmeparameters zurückgenommen ist.

10. Verfahren nach Anspruch 9, **dadurch gekennzeichnet, dass** die vorgegebene Zahnflankengeometrie derart geändert wird, dass das Zahnprofil der Zahnflanke an der einen oder den mehreren Rücknahmepositionen durch Rotation des Zahnprofils um die Mittelachse der Stirnradverzahnung entsprechend des jeweiligen festgelegten Rücknahmeparameters verschoben ist.

11. Verfahren nach zumindest einem der vorhergehenden Ansprüche, **dadurch gekennzeichnet, dass** der Schritt Vorgeben einer Zahnflankengeometrie umfasst:
- Vorgegebenen von Verzahnungsinformationsdaten und
- Berechnen der vorgegebenen Zahnflankengeometrie auf Grundlage der vorgegebenen Verzahnungsinformationsdaten,
wobei die Verzahnungsinformationsdaten umfassen:
- Daten, die eine Größe und Form des Werksstücks angeben,
- Daten, die eine Verzahnungsform angeben, insbesondere eine Verzahnungsform aus den Verzahnungsformen Geradverzahnung, Schrägverzahnung und Bogenverzahnung,
- Daten, die eine Zahnflankenprofilform angeben, insbesondere eine Zahnfiankenprofilform aus den Zahnflankenprofilformen Evolventenprofil, Zykloidprofil, und Kreisbogenprofil,
- Daten, die eine Größe und Form einer Zahngeometrie der Verzahnung angeben,und/oder
- Daten, die eine Zahl der Zähne der Verzahnung angeben.

12. Verfahren zum Erzeugen von Steuerdaten zur Fertigung eines eine Verzahnung aufweisenden Werkstücks, mit den Schritten:
- Vorgeben von Verzahnungsinformationsdaten,
- Berechnen eines Modells des Werkstücks auf Grundlage der vorgegebenen Verzahnungsinformationsdaten, umfassend den Schritt Berechnen einer vorgegebenen Zahnflankengeometrie auf Grundlage der vorgegebenen Verzahnungsinformationsdaten, und
- Erzeugen von Steuerdaten zur Fertigung des Werkstücks, umfassend den Schritt Erzeugen von Steuerdaten zur Ausbildung eines Zahns einer Stirnradverzahnung auf dem Werkstück gemäß einem Verfahren nach zumindest einem der vorhergehenden Ansprüche.

13. Vorrichtung, die dazu eingerichtet ist, Steuerdaten zur Ausbildung eines eine gewünschte Breitenballigkeit aufweisenden Zahns einer Stirnradverzahnung durch fräsende Bearbeitung eines Werkstücks an einer zumindest 5 Achsen umfassenden, numerisch gesteuerten Werkzeugmaschine, insbesondere an einer Universal-Werkzeugmaschine, durch sukzessives Abfahren von Bearbeitungsbahnen mit einem Fräswerkzeug der Werkzeugmaschine auf Grundlage der Steuerdaten gemäß einem Verfahren nach zumindest einem der Ansprüche 1 bis 12 zu erzeugen, mit:
- einem ersten Eingabemittel zum Vorgeben einer Zahnflankengeometrie zumindest einer Zahnflanke des Zahns der Stirnradverzahnung,
- einem zweiten Eingabemittel zum Festlegen von Parametern zum Vorgeben einer Veränderung der vorgegebenen Zahnflankengeometrie in Abhängigkeit der gewünschten Breitenballigkeit des Zahns und
- einem Steuerdatenerzeugungsmittel zum Erzeugen von Steuerdaten auf Grundlage einer in Abhängigkeit der festgelegten Parameter veränderten Zahnflankengeometrie, wobei die veränderte Zahnflankengeometrie einer Zahnflankengeometrie des die gewünschte Breitenballigkeit aufweisenden Zahns entspricht.

14. Vorrichtung zum Erzeugen von Steuerdaten zur Fertigung eines eine Verzahnung aufweisenden Werkstücks, mit:
- einem Eingabemittel zum Vorgeben von Verzahnungsinformationsdaten,
- einem Modellberechnungsmittel zum Berechnen eines Modells des Werkstücks auf Grundlage der vorgegebenen Verzahnungsinformationsdaten, umfassend Berechnen einer vorgegebenen Zahnflankengeometrie auf Grundlage der vorgegebenen Verzahnungsinformationsdaten, und
- einer Vorrichtung gemäß Anspruch 13.

15. Numerisch gesteuerte, zumindest 5 Achsen umfassende Werkzeugmaschine, insbesondere Universal-Werkzeugmaschine, zum fräsenden Bearbeiten eines Werkstücks durch sukzessives Abfahren von Bearbeitungsbahnen mit einem Fräswerkzeug der Werkzeugmaschine auf Grundlage von erzeugten Steuerdaten, umfassend eine Vorrichtung zum Erzeugen von Steuerdaten gemäß Anspruch 13 oder 14.

16. Computerprogrammprodukt, das ein computerlesbares Medium und ein darin gespeichertes Computerprogramm umfasst, wobei das Computerprogramm in der Form einer Abfolge von Zuständen gespeichert ist, die Befehlen entspricht, die eingerichtet sind von einem Datenverarbeitungsmittel einer Datenverarbeitungseinrichtung verarbeitet zu werden, derart, dass ein Verfahren gemäß einem der Ansprüche 1 bis 12 an der Datenverarbeitungseinrichtung ausführbar ist.

## Claims

1. A method for generating control data for forming a tooth of a spur gear toothing which has an intended widthwise crowning by milling a workpiece at a numerically controlled machine tool having at least 5 axes, particularly at a universal machine tool, by successively moving along processing paths with a milling tool of the machine tool based on the generated control data, the method comprising:
providing a tooth flank geometry of at least one tooth flank of the tooth of the spur gear toothing,
determining parameters for defining a change of the provided tooth flank geometry in dependence of the intended widthwise crowning of the tooth, wherein determining the parameters for changing the provided tooth flank geometry comprises determining one respective reduction parameter at one or more determined reduction positions at the at least one tooth flank of the provided tooth flank geometry, and
generating control data based on a tooth flank geometry which is changed in dependence of the determined parameters, wherein the changed tooth flank geometry corresponds to a tooth flank geometry of the tooth having the intended widthwise crowning.

2. A method according to claim 1, **characterized in that** generating the control data comprises calculating a model of the changed tooth flank geometry based on the provided tooth flank geometry and the determined parameters, particularly calculating a model of the tooth of the spur gear toothing based on the provided tooth flank geometry and the determined parameters.

3. A method according to claim 1 or 2, **characterized in that** the parameters for changing the provided tooth flank geometry are determined such that a tooth comprising the changed tooth flank geometry having the intended widthwise crowning results.

4. A method according to at least one of the preceding claims, **characterized in that** the one or more reduction positions are defined on a tooth flank curve of the at least one tooth flank, wherein the tooth flank curve corresponds to an intersection line between an intersection surface through the tooth and the at least one tooth flank of the provided tooth flank geometry.

5. A method according to claim 4, **characterized in that**
the intersection surface through the tooth is an intersection plane through the tooth, particularly a horizontal intersection plane through the tooth, or
the intersection surface extends along a cylindrical surface, which central axis is oriented coaxially with respect to the rotation axis of the spur gear toothing, wherein the intersection surface particularly extends along the pitch circle of the tooth.

6. A method according to claim 5, **characterized in that** the intersection plane is tangent to a pitch circle of the spur gear toothing, the intersection plane is particularly tangent to the pitch circle at a centric point of the intersection plane.

7. A method according to at least one of the claims 1 to 6, **characterized in that** the one or more reduction positions are determined substantially at the height of the pitch circle of the tooth.

8. A method according to at least one of the claims 1 to 7, **characterized by** further comprising determining one or more reduction positions on the provided tooth flank geometry.

9. A method according to at least one of the claims 1 to 8, **characterized in that** the changed tooth flank geometry is retracted at each of the one or more determined reduction positions according to the respective determined reduction parameter in comparison to the provided tooth flank geometry.

10. A method according to claim 9, **characterized in that** the provided tooth flank geometry is changed such that the tooth profile of the tooth flank is shifted at the one or the more reduction positions by rotating the tooth profile around the central axis of the spur gear toothing according to the respective determined reduction parameter.

11. A method according to at least one of the preceding claims, **characterized in that** providing the tooth flank geometry comprises:
providing toothing information data, and
calculating the provided tooth flank geometry based on the provided toothing information data,
wherein the toothing information data comprises:
data which denotes a size and shape of the workpiece,
data which denotes a toothing shape, particularly the toothing shape being one of a spur toothing, helical toothing, and curved toothing,
data which denotes a tooth flank profile shape, particularly the tooth flank profile shape being one of an involute profile, a cycloid profile, or a circular profile,
data which denotes a size and shape of a tooth geometry of the toothing, and/or
data which denotes a number of teeth of the toothing.

12. A method for generating control data for manufacturing a workpiece having a gear toothing, comprising:
providing toothing information data,
calculating a model of the workpiece based on the provided toothing information data, comprising calculating a provided tooth flank geometry based on the provided toothing information data, and
generating control data for manufacturing the workpiece, comprising generating control data for forming a tooth of a spur gear toothing on the workpiece according to a method of at least one of the preceding claims.

13. An apparatus configured to generate control data for forming a tooth of a spur gear toothing which has an intended widthwise crowning by milling a workpiece at a numerically controlled machine tool having at least 5 axes, particularly at a universal machine tool, by successively moving along processing paths with a milling tool of the machine tool based on the generated control data according to a method of at least one of claims 1 to 12, the apparatus comprising:
a first input means for providing a tooth flank geometry of at least one tooth flank of the tooth of the spur gear toothing,
a second input means for determining parameters for defining a change of the provided tooth flank geometry in dependence of the intended widthwise crowing of the tooth, and
a control data generating means for generating control data based on a tooth flank geometry which is changed in dependence of the determined parameters, wherein the changed tooth flank geometry corresponds to a tooth flank geometry of the tooth having the intended widthwise crowing.

14. An apparatus for generating control data for manufacturing a workpiece having a gear toothing, comprising:
an input means for providing toothing information data,
a model calculation means for calculating a model of the workpiece based on the provided toothing information data, comprising calculating a provided tooth flank geometry based on the provided toothing information data, and
an apparatus according to claim 13.

15. A numerically controlled machine tool having at least 5 axes, particularly a universal machine tool, for milling a workpiece by successively moving along processing paths with a milling tool of the machine tool based on the generated control data, the machine tool comprising an apparatus for generating control data according to claim 13 or 14.

16. A computer program product, which comprises a computer-readable medium and a computer program recorded thereon, wherein the computer program is saved in the form of a sequence of states which correspond to commands which are designed so as to be processed by a data processing means of a data processing device, so that a method according to one of claims 1 to 12 is executable at the data processing device.

## Revendications

1. Procédé de génération de données de commande pour réaliser une dent présentant un bombement en largeur souhaité d'une denture de pignon droit par usinage par fraisage d'une pièce à oeuvrer sur une machine-outil à commande numérique comprenant au moins 5 axes, en particulier sur une machine-outil universelle, en parcourant successivement des trajectoires d'usinage au moyen d'un outil de fraisage de la machine-outil en se basant sur les données de commande générées, comprenant les étapes consistant à :
- définir une géométrie de flanc de dent d'au moins un flanc de la dent de la denture de pignon droit,
- fixer des paramètres pour définir une modification de la géométrie de dent de flanc définie en fonction du bombement en largeur souhaité de la dent, la fixation de paramètres pour modifier la géométrie de dent de flanc définie comprenant une fixation d'un paramètre de retrait respectif à une ou à plusieurs positions de retrait fixées sur ledit au moins un flanc de dent de la géométrie de dent de flanc définie, et
- générer des données de commande en se basant sur une géométrie de flanc de dent modifiée en fonction des paramètres fixés, la géométrie de dent de flanc modifiée correspondant à une géométrie de dent de flanc de la dent présentant le bombement en largeur souhaité.

2. Procédé selon la revendication 1, **caractérisé en ce que** l'étape consistant à générer des données de commande inclut le calcul d'un modèle de la géométrie de flanc de dent modifiée sur la base de la géométrie de flanc de dent définie et des paramètres fixés, en particulier le calcul d'un modèle de la dent de la denture de pignon droit sur la base de la géométrie de flanc de dent définie et des paramètres fixés.

3. Procédé selon la revendication 1 ou 2, **caractérisé en ce que** les paramètres pour modifier la géométrie de flanc de dent définie sont fixés de telle sorte qu'il en résulte une dent présentant la géométrie de flanc de dent modifiée et le bombement en largeur souhaité.

4. Procédé selon l'une au moins des revendications précédentes, **caractérisé en ce que** ladite une ou les plusieurs positions de retrait sont fixées sur une ligne de flanc de dent sur ledit au moins un flanc de dent, la ligne de flanc de dent correspondant à une ligne d'intersection entre une surface d'intersection à travers la dent et ledit au moins un flanc de dent de la géométrie de flanc de dent définie.

5. Procédé selon la revendication 4, **caractérisé en ce que** la surface d'intersection à travers la dent est un plan d'intersection à travers la dent, en particulier un plan d'intersection horizontal à travers la dent, ou
**en ce que** la surface d'intersection s'étend le long d'une surface cylindrique dont l'axe médian est orienté coaxialement avec l'axe de rotation de la denture de pignon droit, la surface d'intersection s'étendant en particulier le long du cercle primitif de la dent.

6. Procédé selon la revendication 5, **caractérisé en ce que** le plan d'intersection est tangent au cercle primitif de la denture de pignon droit et est en particulier tangent au cercle primitif à un point central du plan d'intersection.

7. Procédé selon l'une au moins des revendications 1 à 6, **caractérisé en ce que** ladite une ou les plusieurs positions de retrait sont fixées sensiblement à hauteur du cercle primitif de la dent.

8. Procédé selon l'une au moins des revendications 1 à 7, **caractérisé par** l'autre étape consistant à fixer une ou plusieurs positions de retrait sur la géométrie de flanc de dent définie.

9. Procédé selon l'une au moins des revendications 1 à 8, caractérisé en ce la géométrie de flanc de dent modifiée est en retrait par comparaison à la géométrie de flanc de dent définie à chacune de ladite une ou des plusieurs positions de retrait fixées en correspondance du paramètre de retrait fixé respectif.

10. Procédé selon la revendication 9, **caractérisé en ce qu'**à ladite une ou aux plusieurs positions de retrait, la géométrie de flanc de dent définie est modifiée de telle sorte que le profil du flanc de dent est décalé par rotation du profil autour de l'axe médian de la denture de pignon droit en correspondance du paramètre de retrait fixé respectif.

11. Procédé selon l'une au moins des revendications précédentes, **caractérisé en ce que** l'étape consistant à définir une géométrie de flanc de dent consiste à :
- définir des données d'information de denture et
- calculer la géométrie de flanc de dent définie en se basant sur les données d'information de denture,
les données d'information de denture comprenant :
- des données qui indiquent une taille et une forme de la pièce à oeuvrer,
- des données qui indiquent une forme de denture, en particulier une forme de denture parmi les formes de denture que sont la denture droite, la denture oblique et la denture en arc,
- des données qui indiquent une forme du profil de flanc de dent, en particulier une forme de profil de flanc de dent parmi les formes de profil de flanc de dent que sont le profil à développante, le profil cycloïde et le profil en arc de cercle,
- des données qui indiquent une taille et une forme d'une géométrie de dent de la denture, et/ou
- des données qui indiquent un nombre de dents de la denture.

12. Procédé de génération de données de commande pour réaliser une pièce à oeuvrer pourvue d'une denture, comprenant les étapes consistant à :
- définir des données d'information de denture,
- calculer un modèle de la pièce à oeuvrer en se basant sur les données d'information de denture définies, comprenant l'étape consistant à calculer une géométrie de flanc de dent définie en se basant sur les données d'information de denture définies, et
- générer des données de commande pour réaliser la pièce à oeuvrer, comprenant l'étape consistant à générer des données de commande pour réaliser une dent d'une denture de pignon droit sur la pièce à oeuvrer par un procédé selon l'une au moins des revendications précédentes.

13. Dispositif conçu pour générer des données de commande pour réaliser une dent présentant un bombement en largeur souhaité d'une denture de pignon droit par usinage par fraisage d'une pièce à oeuvrer sur une machine-outil à commande numérique comprenant au moins 5 axes, en particulier sur une machine-outil universelle, en parcourant successivement des trajectoires d'usinage au moyen d'un outil de fraisage de la machine-outil en se basant sur les données de commande par un procédé selon l'une au moins des revendications 1 à 12, comportant :
- un premier moyen d'entrée pour définir une géométrie de flanc de dent d'au moins un flanc de la dent de la denture de pignon droit,
- un second moyen d'entrée pour fixer des paramètres pour définir une modification de la géométrie de dent de flanc définie en fonction du bombement en largeur souhaité de la dent, et
- un moyen de génération de données de commande pour générer des données de commande en se basant sur une géométrie de flanc de dent modifiée en fonction des paramètres fixés, la géométrie de dent de flanc modifiée correspondant à une la géométrie de dent de flanc d'une dent présentant le bombement en largeur souhaité.

14. Dispositif de génération de données de commande pour réaliser une pièce à oeuvrer présentant une denture, comportant :
- un moyen d'entrée pour définir des données d'information de denture,
- un moyen de calcul de modèle pour calculer un modèle de la pièce à oeuvrer en se basant sur les données d'information de denture définies, consistant à calculer une géométrie de flanc de dent définie en se basant sur les données d'information de denture définies, et
- un dispositif selon la revendication 13.

15. Machine-outil à commande numérique comprenant au moins 5 axes, en particulier machine-outil universelle, destinée à usiner par fraisage une pièce è oeuvrer en parcourant successivement des trajectoires d'usinage au moyen d'un outil de fraisage de la machine-outil en se basant sur des données de commande générées, comprenant un dispositif pour générer des données de commande selon la revendication 13 ou 14.

16. Produit de programme informatique qui comprend un support lisible à l'ordinateur et un programme informatique mémorisé dans celui-ci, le programme informatique étant mémorisé sous la forme d'une succession d'états qui correspond à des ordres établis pour être traités par un moyen de traitement de données d'un dispositif de traitement de données, de telle sorte qu'un procédé selon l'une des revendications 1 à 12 peut être mis en oeuvre sur le dispositif de traitement de données.
